# EUROPÄISCHE PATENTANMELDUNG

(11) **EP 2 500 572 A2**
(43) Veröffentlichungstag der Anmeldung: **19.09.2012**
(21) Anmeldenummer: 12153274.1
(22) Anmeldetag: 31.01.2012
(51) Int. Cl.: F04D 13/02, F04D 29/043

(54) **Antriebsanordnung einer Pumpe, sowie Antriebsscheibe für eine Pumpe**

(30) Priorität: 17.03.2011 DE 102011005679
(71) Anmelder: Schaeffler Technologies GmbH & Co. KG, 91074 Herzogenaurach (DE)
(72) Erfinder: Nicola, Bernard, 67110 Reichshoffen (FR); Schmitz, Frank, 67250 Surbourg (FR); Herrmann, Jacky, 57820 Dannelbourg (FR)

(57) **Zusammenfassung**

Antriebsanordnung einer Pumpe eines Kraftfahrzeuges, umfassend eine Antriebsscheibe (1), welche an einem Laufrollenkörper (2) mit einem Zugmitteltrieb antreibbar in Kontakt steht und in einem Lager (6) rotierbar gegenüber einem Gehäuse (7) gelagert ist, und eine Antriebswelle (4), welche eine Drehbewegung der Antriebscheibe (1) auf ein Pumpenelement überträgt und hierzu mit einer Topfscheibe (3; 26) der Antriebsscheibe (1) verbunden ist, wobei die Topfscheibe (3; 26) zum einen über einen radialen Abschnitt (15; 25) mit dem Laufrollenkörper (2) und zum anderen mittels eines zylindrischen Abschnitts (17) entlang eines Verbindungsbereichs (18) mit der Antriebswelle (4) drehfest verbunden ist, wobei ein dem Pumpenelement abgewandtes axiales Ende (19) des Verbindungsbereichs (18) innerhalb einer axialen Erstreckung des Lagers (6) liegt und die Antriebswelle (4) und ein zwischen dem zylindrischen (17) und dem radialen Abschnitt (15; 25) liegender Übergangsbereich (16; 27) einen stumpfen Übergangswinkel (α) einschließen.

## Beschreibung

### Gebiet der Erfindung

Die Erfindung betrifft eine Antriebsanordnung einer Pumpe eines Kraftfahrzeuges, umfassend eine Antriebsscheibe, welche an einem Laufrollenkörper mit einem Zugmitteltrieb antreibbar in Kontakt steht und in einem Lager rotierbar gegenüber einem Gehäuse gelagert ist, und eine Antriebswelle, welche eine Drehbewegung der Antriebsscheibe auf ein Pumpenelement überträgt und hierzu mit einer Topfscheibe der Antriebsscheibe verbunden ist, wobei die Topfscheibe zum einen über einen radialen Abschnitt mit dem Laufrollenkörper und zum anderen mittels eines zylindrischen Abschnitts entlang eines Verbindungsbereichs mit der Antriebswelle drehfest verbunden ist. Des Weiteren betrifft die Erfindung eine Antriebsscheibe, welche für eine vorgenannte Antriebsanordnung einer Pumpe geeignet ist. Bei der Pumpe kann es sich um eine Ölpumpe, eine Wasserpumpe oder um eine ein sonstiges Medium fördernde Pumpe handeln.

### Stand der Technik

Aus der EP 1788254 B1 geht eine Antriebsanordnung einer Schaufelradpumpe hervor, bei welcher über eine Antriebsscheibe und eine Antriebswelle eine Antriebsbewegung eines Zugmitteltriebes, insbesondere eines Riementriebes, auf ein Pumpenrad der Wasserpumpe übertragen werden kann. Die Riemenscheibe setzt sich hierbei aus einer Topfscheibe mit einem Laufrollenkörper zusammen. Dabei ist über eine Mantelfläche des Laufrollenkörpers der Zugmitteltrieb geführt und auf einer inneren Umfangsfläche eine Lagerstelle ausgebildet, an welcher der Laufrollenkörper und damit auch die Riemenscheibe insgesamt über ein Lager gegenüber einem Pumpengehäuse rotierbar gelagert ist. Hierzu sind an der inneren Umfangsfläche des Laufrollenkörpers Laufbahnen für Wälzkörper eines doppelreihigen Schrägkugellagers ausgestaltet, dessen Innenring auf einer Gehäuseschulter aufgesetzt ist, wobei diese Gehäuseschulter im Innenbereich eine Aufnahmebohrung zur Aufnahme der Antriebswelle ausbildet.

Ferner verfügt die Topfscheibe über einen radialen Abschnitt, welcher mit dem Laufrollenkörper gekoppelt ist, und einen zylindrischen Abschnitt, wobei der zylindrische Abschnitt eine Nabe für die Anbindung an die Antriebswelle ausbildet, über welche die Topfscheibe mit der Antriebswelle und entlang eines der axialen Länge des zylindrischen Abschnitts entsprechenden Verbindungsbereichs drehfest verbunden ist. Dabei stehen der radiale Abschnitt und der zylindrische Abschnitt über einen zwischenliegenden Übergangsbereich miteinander in Verbindung, welcher als um 90° gebogener Einzelabschnitt gebildet ist.

Ausgehend von dem vorstehend beschriebenen Stand der Technik ist es die Aufgabe der vorliegenden Erfindung, eine Antriebsanordnung einer Pumpe zur Verfügung zu stellen, bei welcher eine Steifigkeit einer Verbindung zwischen der Topfscheibe und der Antriebswelle gesteigert ist.

### Offenbarung der Erfindung

Diese Aufgabe wird durch Anspruchs 1 gelöst. Eine zur Lösung geeignete Ausgestaltung einer Antriebsscheibe geht aus dem nebengeordneten Anspruch 9 hervor. Die hierauf jeweils folgenden, abhängigen Ansprüche geben dabei vorteilhafte Weiterbildungen der Erfindung wieder.

Gemäß der Erfindung umfasst eine Antriebsanordnung einer Pumpe eines Kraftfahrzeuges eine Antriebsscheibe, welche an einem Laufrollenkörper mit einem Zugmitteltrieb antreibbar in Kontakt steht und in einem Lager rotierbar gegenüber einem Gehäuse gelagert ist. Ferner umfasst diese Antriebsanordnung eine Antriebswelle, welche eine Drehbewegung der Antriebsscheibe auf ein Pumpenelement der Pumpe überträgt und zu diesem Zweck mit einer Topfscheibe der Antriebsscheibe verbunden ist. Diese Topfscheibe ist dabei zum einen über einen radialen Abschnitt mit dem Laufrollenkörper und zum anderen mittels eines zylindrischen Abschnitts, welcher eine Nabe für die Anbindung an die Antriebswelle ausbildet, entlang eines Verbindungsbereichs mit der Antriebswelle drehfest verbunden.

Unter der Koppelung zwischen dem radialen Abschnitt der Topfscheibe und dem Laufrollenkörper ist im Sinne der Erfindung neben den hier denkbaren Verbindungsmöglichkeiten, welche beispielsweise durch einen Umformvorgang erzeugbar sind, auch eine einstückige Ausführung von Laufrollenkörper und Topfscheibe zu verstehen. Mit der auf der inneren Umfangsfläche am Laufrollenkörper ausgebildeten Lagerstelle ist ein entsprechender Bereich an der Innenseite des Laufrollenkörpers gemeint, auf welchem ein entsprechender Außenring des jeweiligen Lagers zu platzieren ist. Zudem umfasst diese Formulierung aber auch die Ausbildung von Laufflächen auf der inneren Umfangsfläche des Laufrollenkörpers, so dass ein Lager ohne separaten Außenring dort vorgesehen werden kann. Mit Lager ist im Sinne der Erfindung insbesondere eine Wälzlagerung und hier bevorzugt ein doppelreihiges Schrägkugellager gemeint. Ein einreihiges Kugellager ist jedoch auch denkbar. Die drehfeste Verbindung zwischen der Antriebswelle und dem zylindrischen Abschnitt der Topfscheibe entlang des Verbindungsbereichs kann kraftschlüssig, beispielsweise durch eine Pressverbindung, etc., oder auch alternativ oder ergänzend hierzu formschlüssig durch Vorsehen entsprechender Konturen in Umfangsrichtung gestaltet sein. Des Weiteren kommt hier gegeben falls auch eine stoffschlüssige Verbindung in Betracht.

Die Erfindung umfasst nun die technische Lehre, dass ein dem Pumpenelement abgewandte axiales Ende des Verbindungsbereich innerhalb einer axialen Erstreckung des Lagers liegt und die Antriebswelle und ein Übergangsbereich, welcher den zylindrischen und den radialen Abschnitt der Topfscheibe verbindet, einen stumpfen Übergangswinkel einschließen. Eine Anknüpfung des Übergangsbereich an den zylindrischen Abschnitt ist somit axial in die Erstreckung der am Laufrollenkörper ausgebildeten Lagerstelle verlegt, wobei der zylindrische Abschnitt und der Übergangsbereich hierbei den stumpfen Übergangswinkel einschließen. Berechnungen haben gezeigt, dass eine Verlegung der Anknüpfung des Übergangsbereichs an den zylindrischen Abschnitt und damit auch des axialen Endes des Verbindungsbereich zu einer Steigerung der Steifigkeit der Verbindung zwischen der Pumpenantriebswelle und der Topfscheibe führt, so dass Schwingungen an der Pumpenantriebswelle verringert werden können. Dementsprechend können auch Verformungen im Bereich von Wellendichtringen an der Pumpenantriebswelle reduziert werden, was die Gefahr von über die Wellendichtringe auftretender Leckage vermindert.

Im Unterschied hierzu ist bei der EP 1788254 B1 die Anknüpfung des Übergangsbereichs an den zylindrischen Abschnitt vor der Lagerstelle am Laufrollenkörper platziert, so dass auch das axiale Ende des Verbindungsbereichs zwischen dem zylindrischen Abschnitt und der Pumpenantriebswelle vor der axialen Erstreckung des Lagers liegt. Durch die hieraus resultierende weniger steife Verbindung zwischen Antriebswelle und zylindrischem Abschnitt treten größere Schwingungen an der Antriebswelle auf, welche zu starken Verformungen von Dichtlippen der Wellendichtringe führen und damit deren Lebensdauer beeinträchtigen, sowie in der Folge auch zu Undichtigkeiten an der Antriebswelle führen.

In Weiterbildung der Erfindung liegt das axiale Ende des Verbindungsbereichs in axialer Richtung auf Höhe einer Wälzköranordnung des Lagers. Bevorzugt handelt es sich bei einem mehrreihigen Wälzlager hierbei um eine Wälzkörperreihe. Alternativ hierzu kann das axiale Ende aber auch relativ zu einer Bordseite eines Innenringes des Lagers in axialer Richtung ausgerichtet sein, indem er um mindestens 3mm ausgehend von dieser Bordseite in die axiale Erstreckung des Lagers hineingelegt ist. In beiden vorgenannten Fällen wird hierdurch eine Steigerung der Steifigkeit der Verbindung zwischen Topfscheibe und Antriebswelle erzielt.

Gemäß einer weiteren, vorteilhaften Ausgestaltung der Erfindung liegt eine axiale Mitte des Verbindungsbereichs auf einer axialen Lagerbreitenmitte des Lagers. Vorteilhafterweise lässt sich hierdurch eine extrem niedrige Verkippung der Pumpenantriebswelle erreichen, so dass auch Dichtlippen der zur Abdichtung vorgesehenen Dichtringe insgesamt geringer beansprucht werden. Entsprechend einer weiteren Ausgestaltung der Erfindung ist ein Dichtring in axialer Richtung unmittelbar benachbart zu dem Verbindungsbereich auf Seiten des Pumpenelements platziert. Durch die möglichst dichte Platzierung des Dichtrings an dem Verbindungsbereich und damit auch nahe um den Bereich, um welchen eine Verkippung der Pumpenantriebswelle im Betrieb stattfindet, sind die Dichtlippen des Dichtringes geringen radialen Spaltänderungen ausgesetzt, was in geringen Variationen der Vorspannung resultiert. Mit unmittelbar benachbarter Platzierung zum Verbindungsbereich ist hierbei eine Platzierung unter möglichst geringem Abstand zum Verbindungsbereich gemeint, welche aufgrund von Fertigungstoleranzen und auftretender Bewegungen der Bauteile im Betrieb machbar ist.

In Weiterbildung der Erfindung ist ein Dichtring in axialer Richtung innerhalb des Verbindungsbereichs und radial um den zylindrischen Abschnitt platziert. Eine derartige Ausgestaltung hat hierbei den Vorteil, dass die Dichtung somit auch auf einer axialen Mitte des Verbindungsbereichs platziert werden kann und somit direkt in dem Bereich liegt, um welchen eine Verkippung der Pumpenantriebswelle beim Betrieb stattfindet. Hierdurch sind Dichtlippen des Dichtringes den geringsten Änderungen der Vorspannung ausgesetzt.

In Weiterbildung der Erfindung verfügt das Gehäuse an einer eine Aufnahmebohrung der Antriebswelle ausbildenden und der Topfscheibe zugewandten Schulter über einen Konturverlauf, welcher gegenüberliegenden Bereichen der Topfscheibe entspricht. Dementsprechend kann das Gehäuse sehr dicht an die Topfscheibe herangeführt werden, so dass ein Spalt zwischen Gehäuse und Topfscheibe sehr gering gehalten werden kann. Hierdurch verringert sich der Schmutzeintrag in das Gehäuseinnere und damit Schmutzansammlungen vor den Dichtringen, was deren Lebensdauer erhöht. Zudem ist es im Rahmen der Erfindung denkbar, in dem Zwischenraum zwischen dem Konturverlauf und der Topfscheibe einen permeablen Stoff, beispielsweise ein Vlies, vorzusehen, was zu einer weiteren Verminderung des Verschmutzungseintrags führt und zudem eine zusätzliche Barriere für austretende Medien, wie Öl oder Waser bildet. Entsprechend einer weiteren, vorteilhaften Ausgestaltung der Erfindung ist der Übergangsbereich zwischen dem radialen Abschnitt und dem zylindrischen Abschnitt der Topfscheibe als konisch verlaufender Abschnitt ausgeführt. Alternativ hierzu setzt sich der Übergangsbereich aus mehreren, gegensätzlich gebogenen Einzelabschnitten zusammen. Durch beide Maßnahmen lässt sich ein Übergangsbereich zum zylindrischen Abschnitt realisieren, mittels welchem sich die Anknüpfung zum zylindrischen Abschnitt und damit auch das axiale Ende des Verbindungsbereichs in die axiale Erstreckung des Lagers hineinlegen lässt.

Im Weiteren sei darauf hingewiesen dass es sich bei der Pumpe um eine Ölpumpe in ein Ölpumpentrieb handeln kann, und die Antriebsscheibe sowohl als Riemen- als auch als Kettenrad ausgebildet sein kann.

Die Erfindung ist nicht auf die angegebene Kombination der Merkmale der nebengeordneten Ansprüche oder der abhängigen Ansprüche beschränkt. Es ergeben sich darüber hinaus Möglichkeiten, einzelne Merkmale, auch soweit sie aus den Ansprüchen, der nachfolgenden Beschreibung von Ausführungsformen oder unmittelbar aus den Zeichnungen hervorgehen, miteinander zu kombinieren. Die Bezugnahme der Ansprüche auf die Zeichnungen durch die Verwendung von Bezugszeichen soll den Schutzumfang der Ansprüche nicht beschränken.

Bevorzugte Ausführungsformen der Erfindung werden nachfolgend anhand der beiliegenden Zeichnungen näher erläutert. Diese zeigen:
- Fig. 1: eine Schnittansicht der erfindungsgemäßen Antriebsanordnung einer Pumpe im Bereich einer Antriebsscheibe gemäß einer ersten bevorzugten Ausgestaltung der Erfindung;
- Fig. 2: eine Schnittansicht einer erfindungsgemäßen Antriebsanordnung einer Pumpe im Bereich einer Antriebsscheibe gemäß einer zweiten bevorzugten Ausgestaltung der Erfindung; und Fig. 3 eine Schnittansicht einer erfindungsgemäßen Antriebsanordnung im Bereich einer Antriebsscheibe gemäß einer dritten bevorzugten Ausgestaltung der Erfindung.

### Ausführliche Beschreibung der Zeichnungen

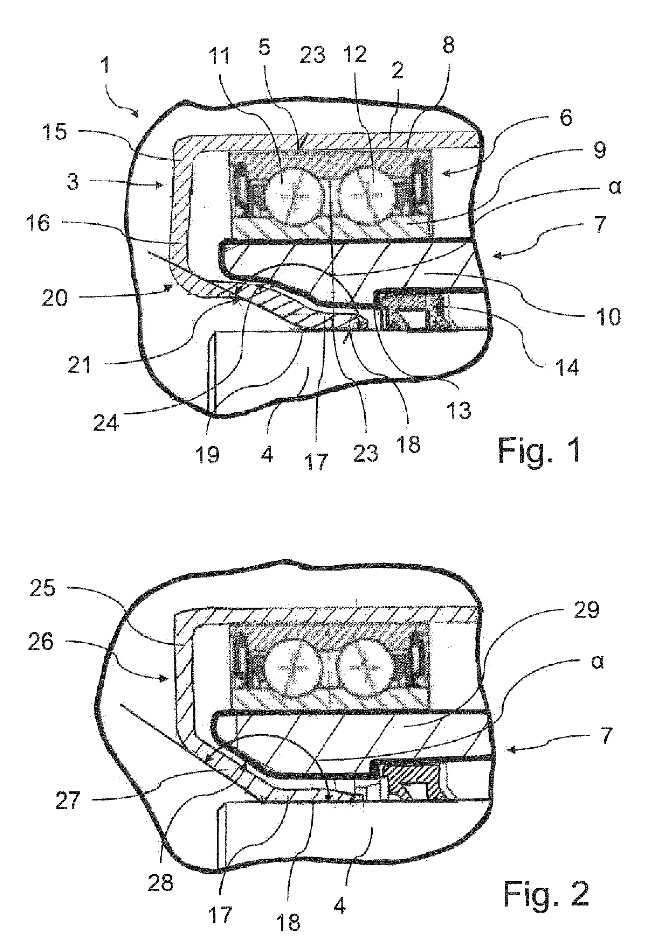

Aus Fig. 1 geht eine Schnittansicht einer erfindungsgemäßen Antriebsanordnung einer Pumpe eines Kraftfahrzeuges hervor. Diese umfasst eine Antriebsscheibe 1, welche an einem Laufrollenkörper 2 mit einem - vorliegend nicht weiter dargestellten - Zugmitteltrieb, wie z.B. Ketten oder Riementrieb, angetrieben werden kann und diese Drehbewegung über eine Topfscheibe 3 auf eine Antriebswelle 4 überträgt. Hierbei steht der Laufrollenkörper 2 auf seiner Mantelfläche mit dem nicht dargestellten Zugmitteltrieb in Verbindung und bildet zudem auf einer inneren Umfangsfläche eine Lagerstelle 5 aus, an welcher die Antriebsscheibe 1 über das Lager 6 rotierbar gegenüber einem Pumpengehäuse 7 gelagert ist. Das Lager 6 ist hierbei als doppelreihiges Schrägkugellager ausgeführt, dessen Außenring 8 an der Lagerstelle 5 drehfest mit dem Laufrollenkörper 2 und dessen Innenring 9 auf einer Schulter 10 des Gehäuses 7 positioniert ist. Eine Relativbewegung zwischen der Antriebsscheibe 1 und dem Gehäuse 7 wird dabei durch Abwälzbewegungen der Wälzkörperanordnung 11,12 ermöglicht. Die Gehäuseschulter 10 bildet zudem auf einer dem Lager 6 abgewandten Seite eine Aufnahmebohrung 13 aus, über welche die Antriebswelle 4 in ein Inneres des Gehäuses 7 geführt ist und im Inneren mit einem - vorliegend nicht weiter dargestellten - Pumpenelement in Form eines Pumpenrades in Verbindung steht. Über diese Pumpenrad wird bei Antrieb über die Antriebswelle 4 auf dem Fachmann bekannte Art und Weise für eine Förderung von Kühlmittel gesorgt. Um einen Innenraum des Pumpengehäuses 7 gegenüber dem seitens der Antriebsscheibe 1 platzierten Ende der Antriebswelle 4 abzudichten und damit ein ungewolltes Hinausgelangen von Öl aus einem Innenraum des Gehäuses 7 zu verhindern, nimmt die Aufnahmebohrung 13 zudem einen Dichtring 14 auf, welcher über entsprechende Dichtlippen den davorliegenden Bereich des Gehäuses 7 abdichtet.

Vorliegend sind der Laufrollenkörper 2 und die Topfscheibe 3 als einstückiges Bauteil ausgeführt, wobei im Rahmen der Erfindung aber auch eine Ausführung aus Einzelteilen, welche an entsprechenden Stellen zusammengefügt sind, prinzipiell denkbar ist. Die Topfscheibe 3 verfügt hierbei über einen radialen Abschnitt 15, welcher axial benachbart zu der Lagerstelle 5 in den Laufrollenkörper 2 übergeht. An dem radialen Abschnitt 15 schließt sich ein Übergangsbereich 16 an, der letztendlich in einem zylindrischen Abschnitt 17 der Topfscheibe 3 endet. Dieser zylindrische Abschnitt 17 bildet dabei eine Nabe aus, welche auf einer radialen Innenseite einen Verbindungsbereich 18 mit der Antriebswelle 4 ausgestaltet. Über diesen Verbindungsbereich 18 wird die durch den Zugmitteltrieb auf die Mantelfläche des Laufrollenkörpers 2 aufgeprägte Drehbewegung mittels des radialen Abschnitts 15 und des Übergangsbereichs 16 letztendlich auf die Antriebswelle 4 übertragen. Eine Verbindung zwischen dem zylindrischen Bereich 17 und der Antriebswelle 4 entlang des Verbindungsbereichs 18 ist vorliegend dabei in Form einer kraftschlüssigen Verbindung, beispielsweise einer Pressverbindung gestaltet, kann im Sinne der Erfindung aber auch als formschlüssige oder aber auch als stoffschlüssige Verbindung ausgeführt sein.

Als Besonderheit liegt nun ein axiales Ende 19 des Verbindungsbereichs 18 innerhalb einer axialen Erstreckung des Lagers 6, so dass eine Steifigkeit der Verbindung zwischen dem zylindrischen Abschnitt 17 und der Antriebswelle 4 gesteigert ist. Der Übergangsbereich 16 setzt sich nun aus drei gegensätzlich gebogenen Einzelabschnitten 20, 21 und 22 zusammen, über welche eine Verlegung des axialen Endes 19 und damit auch der Anknüpfung an den zylindrischen Abschnitt 17 in die axiale Erstreckung des Lagers 6 möglich ist. Hierbei schließen der Übergangsbereich 16 und der zylindrische Abschnitt 17 und damit auch die Antriebswelle 4 und der Übergangsbereich 16 einen zwischenliegenden Übergangswinkel α ein, welcher als stumpfer Winkel ausgeführt ist. Um zudem die Auswirkung eines Verkippens der Antriebswelle 4 auf den Dichtring 14 möglichst gering zu halten, ist dieser in axialer Richtung unmittelbar benachbart zu dem zylindrischen Abschnitt 18 der Topfscheibe 3 angeordnet. Dementsprechend befindet sich der Dichtring 14 auch näher am Verbindungsbereich 17, so dass radiale Spaltänderungen zwischen der Aufnahmebohrung 13 und der Antriebswelle 4 an dem Dichtelement 14 geringer ausfallen als bei einer weiter hierzu beabstandeten Position.

Wie des Weiteren aus Fig. 1 ersichtlich ist, liegt eine axiale Mitte 23 des Verbindungsbereichs 18 auf einer axialen Lagerbreitenmitte des Lagers 6. Dieser Umstand bewirkt dabei, dass ein Verkippen der Antriebswelle 4 insgesamt gering gehalten werden kann. Schließlich ist noch als weitere Besonderheit die Schulter 10 des Gehäuses 7 mit einem Konturverlauf 24 versehen, welcher einem Verlauf des Übergangsbereichs 16 und des zylindrischen Abschnitts 17 entspricht. Hierdurch kann die Schulter 10 sehr dicht an die Topfscheibe 3 herangeführt werden, so dass ein Spalt zwischen der Schulter 10 des Gehäuses 7 und der Topfscheibe 3 klein ausfällt. Hierdurch können insbesondere Verunreinigungen, welche über üblicherweise an der Topfscheibe 3 ausgebildete und vorliegend nicht weiter dargestellte Belüftungsöffnungen eingetragen werden können, an einem Gelangen zum Dichtring 14 gehindert werden. In den Bereich zwischen dem Konturverlauf 24 und dem Übergangsbereich 16 kann im Sinne der Erfindung zudem ein permeabler Stoff, beispielsweise ein Vlies, vorgesehen werden, welches ebenfalls ein Eintrag von Verschmutzungen verhindert und zudem eine weitere Barriere für dennoch über den Dichtring 14 gelangendes Öl darstellt.

Des Weiteren geht aus Fig. 2 eine zweite bevorzugte Ausgestaltung einer erfindungsgemäßen Antriebsanordnung hervor. Im Unterschied zu der im Vorfeld beschriebenen Variante ist in diesem Fall ein radialer Abschnitt 25 der Topfscheibe 26 weiter nach radial innen gezogen, wobei an diesem radialen Abschnitt 25 ein Übergangsbereich 27 zum zylindrischen Abschnitt 17 anknüpft, welcher vorliegend als konisch verlaufender Abschnitt ausgeführt ist. An diesen konischen Verlauf des Übergangsabschnitts 27 ist dabei auch wiederum ein Konturverlauf 28 einer Schulter 29 des Gehäuses 7 angepasst. Der zwischen dem zylindrischen Abschnitt 17 und der Antriebswelle 4 ausgebildete Verbindungsbereich 18 ist in diesem Fall etwas verlängert ausgebildet.

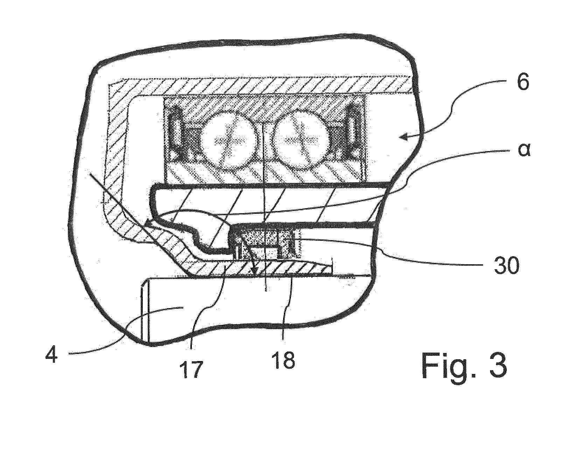

Schließlich geht aus Fig. 3 noch eine dritte bevorzugte Ausgestaltung einer erfindungsgemäßen Antriebsanordnung hervor, bei welcher im Unterschied zu der Ausgestaltung nach Fig. 1 ein Dichtring 30 in axialer Richtung innerhalb des Verbindungsbereichs 18 zwischen dem zylindrischen Abschnitt und der Antriebswelle 4 platziert ist und dabei den zylindrischen Abschnitt 17 radial umgibt. Insbesondere ist dieser Dichtring 30 dabei auf der axialen Mitte des Verbindungsbereichs 18 und auch auf der axialen Lagerbreitenmitte des Lagers 6 positioniert, wodurch der Dichtring 30 im Bereich der geringsten auftretenden Verkippungen der Antriebswelle 4 sitzt. Dementsprechend wird der Dichtring 30 auch nur sehr geringen Beanspruchungen ausgesetzt.

Mittels der einzelnen Ausgestaltungen einer erfindungsgemäßen Antriebsanordnung lässt sich somit eine Steifigkeit der Verbindung zwischen einer Topfscheibe, einer Antriebsscheibe und einer Antriebswelle eines Pumpenrades steigern und damit Beeinträchtigungen von Dichtringen deutlich reduzieren. Zudem kann durch entsprechende Platzierungen der Dichtringe generell deren Beanspruchung gemindert werden.

### Bezugszeichenliste

- 1: Antriebsscheibe
- 2: Laufrollenkörper
- 3: Topfscheibe
- 4: Antriebswelle
- 5: Lagerstelle
- 6: Lager
- 7: Gehäuse
- 8: Außenring
- 9: Innenring
- 10: Schulter
- 11: Wälzlageranordnung
- 12: Wälzlageranordnung
- 13: Aufnahmebohrung
- 14: Dichtring
- 15: radialer Abschnitt
- 16: Übergangsbereich
- 17: zylindrischer Abschnitt
- 18: Verbindungsbereich
- 19: axiales Ende
- 20: Einzelabschnitte
- 21: Einzelabschnitte
- 22: Einzelabschnitte
- 23: Mitte Verbindungsbereich
- 24: Konturverlauf
- 25: radialer Abschnitt
- 26: Topscheibe
- 27: Übergangsbereich
- 28: Konturverlauf
- 29: Schulter
- 30: Dichtring
- α: Übergangswinkel

## Patentansprüche

1. Antriebsanordnung einer Pumpe eines Kraftfahrzeuges, umfassend eine Antriebsscheibe (1), welche an einem Laufrollenkörper (2) mit einem Zugmitteltrieb antreibbar in Kontakt steht und in einem Lager (6) rotierbar gegenüber einem Gehäuse (7) gelagert ist, und eine Antriebswelle (4), welche eine Drehbewegung der Antriebscheibe (1) auf ein Pumpenelement überträgt und hierzu mit einer Topfscheibe (3; 26) der Antriebsscheibe (1) verbunden ist, wobei die Topfscheibe (3; 26) zum einen über einen radialen Abschnitt (15; 25) mit dem Laufrollenkörper (2) und zum anderen mittels eines zylindrischen Abschnitts (17) entlang eines Verbindungsbereichs (18) mit der Antriebswelle (4) drehfest verbunden ist, wobei ein dem Pumpenelement abgewandtes axiales Ende (19) des Verbindungsbereichs (18) innerhalb einer axialen Erstreckung des Lagers (6) liegt und die Antriebswelle (4) und ein zwischen dem zylindrischen (17) und dem radialen Abschnitt (15; 25) liegender Übergangsbereich (16; 27) einen stumpfen Übergangswinkel (α) einschließen.

2. Antriebsanordnung nach Anspruch 1, **dadurch gekennzeichnet, dass** das axiale Ende (19) in axialer Richtung auf Höhe einer Wälzkörperanordnung (11,12) des Lagers (6) liegt.

3. Antriebsanordnung nach Anspruch 1, **dadurch gekennzeichnet, dass** das axiale Ende (19) in axialer Richtung ausgehend von einer Bordseite eines Innenrings (9) des Lagers (6) um mindestens 3 mm innerhalb der axialen Erstreckung des Lagers (6) liegt.

4. Antriebsanordnung nach Anspruch 1, **dadurch gekennzeichnet, dass** eine axiale Mitte (23) des Verbindungsbereichs (18) auf einer axialen Lagerbreitenmitte des Lagers (6) liegt.

5. Antriebsanordnung nach Anspruch 1, **dadurch gekennzeichnet, dass** ein Dichtring (14) in axialer Richtung unmittelbar benachbart zu dem Verbindungsbereich (18) auf Seiten des Pumpenelements platziert ist.

6. Antriebsanordnung nach Anspruch 1, **dadurch gekennzeichnet, dass** ein Dichtring (14) in axialer Richtung innerhalb des Verbindungsbereichs (18) und radial um den zylindrischen Abschnitt (17) platziert ist.

7. Antriebsanordnung nach Anspruch 1, **dadurch gekennzeichnet, dass** das Gehäuse (7) an einer eine Aufnahmebohrung (13) der Antriebswelle (4) ausbildenden und der Topfscheibe (3; 26) zugewandten Schulter (10; 29) über einen Konturverlauf (24; 28) verfügt, welcher gegenüberliegenden Bereichen der Topfscheibe (3; 26) entspricht.

8. Antriebsanordnung nach Anspruch 1, **dadurch gekennzeichnet, dass** es sich bei der Pumpe um eine Ölpumpe handelt.

9. Antriebsscheibe (1) für eine Antriebsanordnung einer Pumpe, mit einem Laufrollenkörper (2), auf dessen Mantelfläche ein Zugmitteltrieb führbar ist und der auf einer inneren Umfangsfläche eine Lagerstelle (5) zur Lagerung der Antriebsscheibe (1) ausbildet, und mit einer Topfscheibe (3; 26), die mit einem zylindrischen Abschnitt (17) eine Nabe für eine Anbindung an eine Antriebswelle (4) bildet und über einen radialen Abschnitt (15; 25) axial benachbart zu der Lagerstelle (5) mit dem Laufrollenkörper (2) gekoppelt ist, wobei der radiale Abschnitt (15; 25) und der zylindrische Abschnitt (17) miteinander über einen sich ausgehend vom radialen Abschnitt (15; 25) nach radial innen und axial zum zylindrischen Abschnitt (17) erstreckenden Übergangsbereich (16; 27) verbunden sind, wobei eine Anknüpfung des Übergangsbereichs (16; 27) an den zylindrischen Abschnitt (17) axial innerhalb einer Erstreckung der Lagerstelle (5) liegt und der zylindrische Abschnitt (17) und der Übergangsbereich (16; 27) einen stumpfen Übergangswinkel (α) einschließen.

10. Antriebsscheibe nach Anspruch 9, **dadurch gekennzeichnet, dass** der Übergangsbereich (27) als konisch zwischen dem radialen Abschnitt (25) und dem zylindrischen Abschnitt (17) verlaufender Abschnitt ausgeführt ist.

11. Antriebsscheibe nach Anspruch 9, **dadurch gekennzeichnet, dass** sich der Übergangsbereich (16) aus mehreren, gegensätzlich gebogenen Einzelabschnitten (20, 21, 22) zusammensetzt.

12. Antriebsscheibe nach Anspruch 9, **dadurch gekennzeichnet, dass** es sich bei der Pumpe um eine Ölpumpe handelt.
